# EUROPEAN PATENT APPLICATION

(11) **EP 4 510 728 A1**
(43) Date of publication of application: **19.02.2025**
(21) Application number: 23796737.7
(22) Date of filing: 24.04.2023
(51) Int. Cl.: H04W 72/02, H04W 72/20, H04W 72/51, H04W 4/40, H04W 92/18

(54) **METHOD AND DEVICE FOR MANAGING COOPERATION INFORMATION BETWEEN TERMINALS FOR SIDELINK COMMUNICATION IN WIRELESS COMMUNICATION SYSTEM**

(30) Priority: 25.04.2022 KR 20220050876
(71) Applicant: Samsung Electronics Co., Ltd., Suwon-si, Gyeonggi-do 16677 (KR)
(72) Inventor: YU, Jeongseok, Suwon-si, Gyeonggi-do 16677 (KR)
(74) Representative: Gulde & Partner
(86) International application number: PCT/KR2023/005549
(87) International publication number: WO 2023/211091

(57) **Abstract**

The present disclosure relates to a 5G or 6G communication system for supporting higher data transmission rates. A method for a first terminal for sidelink communication according to an embodiment of the present disclosure may comprise the steps of: transmitting, to a second terminal, sidelink control information (SCI) comprising resource reservation information for resources for sidelink transmission; receiving, from the second terminal, conflict information for a resource indicated by the resource reservation information; and on the basis of at least one piece of previously received conflict information, reselecting a resource for a subsequent sidelink transmission.

## Description

### [Technical Field]

The disclosure relates to a method and an apparatus for managing cooperation information between UEs for sidelink communication in a wireless communication system and, more particularly, to an apparatus and a method for storing and using resource conflict information of cooperation information between UEs in order to support resource selection for sidelink communication.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Solution to Problem]

A method of a first terminal for sidelink communication according to an embodiment of the disclosure may include transmitting sidelink control information (SCI) including resource reservation information of resources for sidelink transmission to a second terminal, receiving conflict information of resources indicated by the resource reservation information from the second terminal, and based on one or more pieces of previously received conflict information, reselecting resources for future sidelink transmission.

### [Advantageous Effects of Invention]

According to an embodiment of the disclosure, a method and an apparatus for managing inter-UE coordination information for sidelink communication in a wireless communication system may be provided.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a wireless communication system according to various embodiments of the disclosure.
FIG. 2 illustrates a configuration of a BS in a wireless communication system according to various embodiments of the disclosure.
FIG. 3 illustrates a configuration of a UE in a wireless communication system according to various embodiments of the disclosure.
FIGs. 4A to 4C illustrate a configuration of a communication unit in a wireless communication system according to various embodiments of the disclosure.
FIG. 5 is a diagram illustrating a situation where direct communication between UEs such as a unicast, groupcast, or broadcast manner is performed according to various embodiments of the disclosure.
FIGs. 6A to 6E illustrate a procedure of configuring transmission resources and selecting resources of the UE using sidelink resource allocation mode 2, an operation of reserving resources for sidelink communication and transmitting data, and an operation of inter-UE coordination scheme 2 of a UE-A and a UE-B according to various embodiments of the disclosure.
FIG. 7 is a diagram illustrating problems occurring when a conflict indication is not stored.
FIG. 8 illustrates a method of storing and managing the conflict indication according to various embodiments of the disclosure.
FIG. 9 illustrates an operation of using resources corresponding to stored conflict information according to various embodiments of the disclosure.

### [Best Mode for Carrying out the Invention]

A method of a first UE for sidelink communication according to an embodiment of the disclosure may include transmitting sidelink control information (SCI) including resource reservation information of resources for sidelink transmission to a second UE, receiving conflict information of resources indicated by the resource reservation information from the second UE, and based on one or more pieces of previously received conflict information, reselecting resources for future sidelink transmission.

In an embodiment, the method may further include receiving a resource pool for the sidelink transmission from a base station (BS) and selecting resources for the sidelink transmission from the resource pool. The resource reservation information may include information indicating the selected resources.

In an embodiment, the method may further include storing the received conflict information. In one or more cases where resources indicated by the conflict information are not included in a resource selection window, the resources are located before a current slot, and the resources are excluded from available resources, the received conflict information may not be stored.

In an embodiment, the conflict information may be transmitted through a physical sidelink feedback channel (PSFCH).

A method of a second UE for sidelink communication according to an embodiment of the disclosure may include receiving sidelink control information (SCI) including resource reservation information for sidelink transmission from a first UE, determining whether conflict for resources indicated by the resource reservation information is generated, and in case that it is determined that the conflict for the resources indicated by the resource reservation information is generated, transmitting conflict information of the resources indicated by the resource reservation information to the first UE.

In an embodiment, the method may further include receiving a resource pool for the sidelink transmission from a base station (BS). The resource reservation information may include information indicating resources selected from the resource pool by the first UE for the sidelink transmission.

In an embodiment, the conflict information may be transmitted through a physical sidelink feedback channel (PSFCH).

In an embodiment, the method may further include performing the sidelink communication with the first UE by using resources reselected based on the conflict information.

A first UE for sidelink communication according to an embodiment of the disclosure may include a transceiver and a controller connected to the transceiver, wherein the controller may be configured to transmit sidelink control information (SCI) including resource reservation information of resources for sidelink transmission to a second UE, receive conflict information of resources indicated by the resource reservation information from the second UE, and based on one or more pieces of previously received conflict information, reselect resources for future sidelink transmission.

In an embodiment, the controller may be configured to receive a resource pool for the sidelink transmission from a base station (BS) and select resources for the sidelink transmission from the resource pool. The resource reservation information may include information indicating the selected resources.

In an embodiment, in one or more cases where resources indicated by the conflict information are not included in a resource selection window, the resources are located before a current slot, and the resources are excluded from available resources, the controller may be configured to not store the received conflict information.

In an embodiment, the conflict information may be transmitted through a physical sidelink feedback channel (PSFCH).

A second UE for sidelink communication according to an embodiment of the disclosure may include a transceiver and a controller connected to the transceiver, wherein the controller may be configured to receive sidelink control information (SCI) including resource reservation information for sidelink transmission from a first UE, determine whether conflict for resources indicated by the resource reservation information is generated, and in case that it is determined that the conflict for the resources indicated by the resource reservation information is generated, transmit conflict information for the resources indicated by the resource reservation information to the first UE.

In an embodiment, the controller may be configured to receive a resource pool for the sidelink transmission from a base station (BS). The resource reservation information may include information indicating resources selected for the sidelink transmission from the resource pool.

In an embodiment, the conflict information may be transmitted through a physical sidelink feedback channel (PSFCH).

### [Mode for Carrying out Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating timefrequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of 10-5 or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

Hereinafter, the disclosure relates to an apparatus and a method for storing and using resource conflict information of cooperation information between UEs in order to support resource selection for communication between UEs in a wireless communication system. Specifically, the disclosure describes a technology for more efficiently using inter-UE coordination (IUC) information by a UE that selects or reselects resources through storage and management of IUC information to solve an interference problem according to a resource reservation situation of another UE that may occur when resources are selected or reselected in resource allocation mode 2 used for NR sidelink (direct communication between UEs) in a wireless communication system.

The disclosure proposes a scheme capable of continuously using inter-UE coordination information for resource selection or reselection by handling and managing, as reusable information rather than one-time information, the inter-UE coordination information that can be used for resource selection or reselection for sidelink communication in a next-generation wireless communication system.

In the disclosure, through a method of storing and managing information on inter-UE coordination scheme 2 that can be used for sidelink resource allocation mode 2 according to various embodiments, when resource reselection is generated by inter-UE coordination information received by the UE-B or when resource selection or reselection is generated according to the conventional operation, effects of selecting the resources except for resources that may give interference to other UEs included in the stored information are obtained.

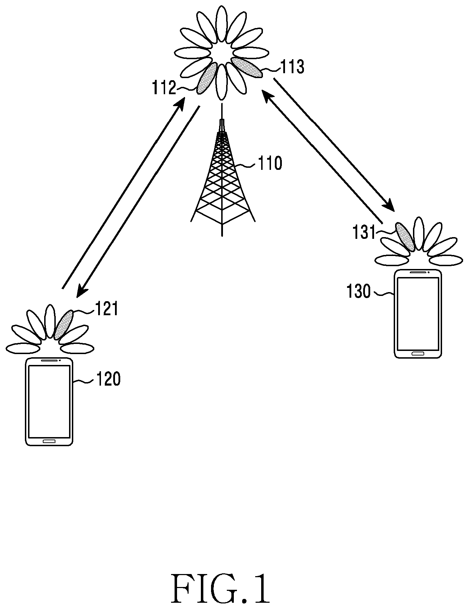

FIG. 1 illustrates a wireless communication system according to various embodiments of the disclosure.

Referring to FIG. 1, in the wireless communication system, a base station (BS) 110, a user equipment (UE) 120, and a UE 130 are illustrated as parts of nodes using a radio channel. FIG. 1 illustrates only one BS 110 but may further include another BS that is the same as or similar to the BS 110. FIG. 1 illustrates only two UEs 120 and 130 but may further include another UE that is the same as or similar to the UE 120 and the UE 130.

The BS 110 is a network infrastructure element that provides radio access to the UEs 120 and 130. The BS 110 has coverage defined as a predetermined geographic area, based on a distance to which a signal can be transmitted. The BS 110 may be referred to as an "access point (AP)", "eNodeB (eNB)", "5^{th}-generation (5G) node", "5G NodeB (gNodeB or gNB)", "wireless point", or "transmission/reception point (TRP)", or using another term having a technical meaning equivalent thereto, as well as "base station".

Each of the UE 120 and the UE 130 is a device used by a user and communicates with the BS 110 through a radio channel. Depending on circumstances, at least one of the UE 120 and the UE 130 may be operated without any involvement by the user. That is, at least one of the UEs 120 and 130 is a device that performs machine-type communication (MTC), and may not be carried by the user. Each of the UE 120 and the UE 130 may be referred to as a "user equipment (UE)", "mobile station", "subscriber station", "remote terminal", "wireless terminal", or "user device", or using another term having an equivalent technical meaning, as well as "terminal".

The BS 110, the UE 120, and the UE 130 may transmit and receive a wireless signal in a sub 6 GHz band and millimeter-wave (mmWave) bands (for example, 28 GHz, 30 GHz, 38 GHz, 60 GHz, and the like). At this time, in order to increase a channel gain, the BS 110, the UE 120, and the UE 130 may perform beamforming. The beamforming may include transmission beamforming and reception beamforming. That is, the BS 110, the UE 120, and the UE 130 may assign directivity to a transmission signal or a reception signal. To this end, the BS 110 and the UEs 120 and 130 may select serving beams 112, 113, 121, and 131 through a beam search procedure or beam management procedure. After the serving beams 112, 113, 121, and 131 are selected, communication may be performed through resources having a quasi-co-located (QCL) relationship with resources transmitting the serving beams 112, 113, 121, and 131.

When the large-scale characteristics of a channel for transmitting symbols through a first antenna port can be inferred from a channel for transmitting symbols through a second antenna port, the first antenna port and the second antenna port may be evaluated to have a QCL relationship therebetween. For example, the large-scale characteristics may include at least one of delay spread, Doppler spread, Doppler shift, average gain, average delay, and spatial receiver parameters.

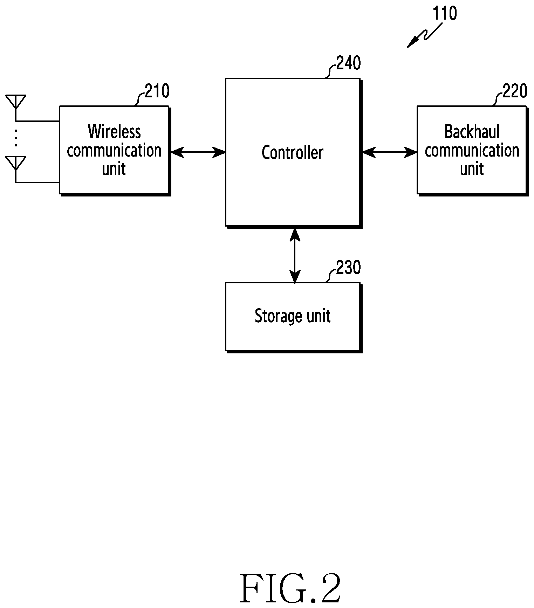

FIG. 2 illustrates a configuration of a BS in a wireless communication system according to various embodiments of the disclosure.

The configuration illustrated in FIG. 2 may be understood as the configuration of the BS 110. The term ".. unit", "...er", or the like may indicate a unit of processing at least one function or operation, which may be embodied in hardware, software, or a combination of hardware and software.

Referring to FIG. 2, the BS may include a wireless communication unit 210, a backhaul communication unit 220, a storage unit 230, and a controller 240.

The wireless communication unit 210 performs functions for transmitting and receiving a signal through a radio channel. For example, the wireless communication unit 210 performs a function of conversion between a baseband signal and a bitstream according to the physical-layer standard of the system. For example, in data transmission, the wireless communication unit 210 may encode and modulate a transmission bitstream to generate complex symbols. In data reception, the wireless communication unit 210 reconstructs the reception bitstream by demodulating and decoding the baseband signal.

The wireless communication unit 210 up-converts a baseband signal into a radio-frequency (RF) band signal, transmits the RF band signal through an antenna, and down-converts an RF band signal received through an antenna into a baseband signal. To this end, the wireless communication unit 210 may include a transmission filter, a reception filter, an amplifier, a mixer, an oscillator, a digital-to-analog convertor (DAC), and an analog-to-digital convertor (ADC). Further, the wireless communication unit 210 may include a plurality of transmission/reception paths. In addition, the wireless communication unit 210 may include at least one antenna array including a plurality of antenna elements.

On the hardware side, the wireless communication unit 210 may include a digital unit and an analog unit, and the analog unit may be configured by a plurality of sub-units according to operating power and operating frequency. The digital unit may be implemented by at least one processor (for example, a digital signal processor (DSP)).

The wireless communication unit 210 transmits and receives a signal as described above. Accordingly, all or part of the wireless communication unit 210 may be referred to as a "transmitter", a "receiver", or a "transceiver". Further, in the following description, transmission and reception performed through a radio channel may include the above-described processing by the wireless communication unit 210.

The backhaul communication unit 220 provides an interface for communicating with other nodes within the network. That is, the backhaul communication unit 220 converts a bitstream transmitted from the BS 110 to another node, for example, another access node, another BS, a higher node, or a core network, into a physical signal, and converts a physical signal received from another node into a bitstream.

The storage unit 230 stores data such as a basic program, an application, and configuration information for the operation of the BS 110. The storage unit 230 may include volatile memory, nonvolatile memory, or a combination of volatile memory and nonvolatile memory. The storage unit 230 provides stored data in response to a request from the controller 240.

The controller 240 controls the overall operations of the BS 110. For example, the controller 240 transmits and receives a signal through the wireless communication unit 210 or the backhaul communication unit 220. The controller 240 records data in the storage unit 230 and reads the data. The controller 240 may perform the functions of a protocol stack required according to communication standards. According to another implementation, the protocol stack may be included in the wireless communication unit 210. To this end, the controller 240 may include at least one processor.

According to various embodiments, the controller 240 may transmit radio resource control (RRC) configuration information to the UEs 120 and 130. For example, the controller 240 may control the BS 110 to perform operations according to various embodiments described below.

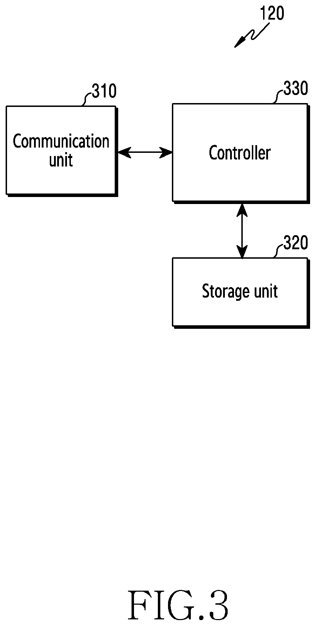

FIG. 3 illustrates a configuration of a UE in a wireless communication system according to various embodiments of the disclosure.

The configuration illustrated in FIG. 3 may be understood as the configuration of the UE 120 or the UE 130. The term ".. unit", "... er", or the like may indicate a unit of processing at least one function or operation, which may be embodied in hardware, software, or a combination of hardware and software.

Referring to FIG. 3, the UE may include a communication unit 310, a storage unit 320, and a controller 330.

The communication unit 310 performs functions for transmitting and receiving a signal through a radio channel. For example, the communication unit 310 performs a function of conversion between a baseband signal and a bitstream according to a physical-layer standard of the system. For example, in data transmission, the communication unit 310 encodes and modulates a transmission bitstream to generate complex symbols. In data reception, the communication unit 310 reconstructs a reception bitstream by demodulating and decoding a baseband signal. Further, the communication unit 310 up-converts a baseband signal to an RF band signal, transmits the RF band signal through an antenna, and then down-converts the RF band signal received through the antenna to the baseband signal. For example, the communication unit 310 may include a transmission filter, a reception filter, an amplifier, a mixer, an oscillator, a DAC, and an ADC.

The communication unit 310 may include a plurality of transmission/reception paths. The communication unit 310 may include at least one antenna array including a plurality of antenna elements. On the hardware side, the communication unit 310 may include a digital circuit and an analog circuit (for example, a radio frequency integrated circuit (RFIC)). The digital circuit and the analog circuit may be implemented as one package. The communication unit 310 may include a plurality of RF chains. The communication unit 310 may perform beamforming.

The communication unit 310 may include different communication modules for processing signals in different frequency bands. The communication unit 310 may include a plurality of communication modules to support a plurality of different radio access technologies. For example, the different radio access technologies may include Bluetooth Low Energy (BLE), Wi-Fi, Wi-Fi Gigabyte, and cellular network (for example, Long-Term Evolution (LTE)). Further, different frequency bands may include a Super High Frequency (SHF) (for example, 2.5 GHz and 5 Ghz) band and a millimeter (mm) wave (for example, 60 GHz) band.

The communication unit 310 transmits and receives a signal as described above. Accordingly, all or some of the communication unit 310 may be referred to as a "transmitter", a "receiver", or a "transceiver". In the following description, transmission and reception performed through a radio channel are used to have a meaning including the processing performed by the communication unit 310.

The storage unit 320 stores data such as a basic program, an application, and configuration information for the operation of the terminal. The storage unit 320 may include volatile memory, nonvolatile memory, or a combination of volatile memory and nonvolatile memory. The storage unit 320 provides stored data in response to a request from the controller 330.

The controller 330 controls the overall operation of the UE. For example, the controller 330 transmits and receives a signal through the communication unit 310. The controller 330 records data in the storage unit 320 and reads the same. The controller 330 may perform the functions of a protocol stack required by the communication standard. To this end, the controller 330 may include at least one processor or microprocessor, or may be a part of the processor. Further, the part of the communication unit 310 or the controller 330 may be referred to as a communications processor (CP).

According to various embodiments, the controller 330 may perform a process of, when the UE 120 establishes a sidelink unicast session with another UE or transmits sidelink groupcast or broadcast to other UEs, acquiring resource allocation information required for sidelink transmission from the BS, a process of determining available resources among resources configured to be available by the UE 120, a process of, after receiving a sidelink control information (SCI) message for reserving resources transmitted by another UE, determining that resource information provided by the message corresponds to resources being used or scheduled to be used by the UE 120, or resources reserved by other UEs including the a process of selecting a UE to transmit inter-UE coordination information by the UE 120, and a process of transmitting the inter-UE coordination information. For example, the controller 330 may control the UE to perform operations according to various embodiments described below.

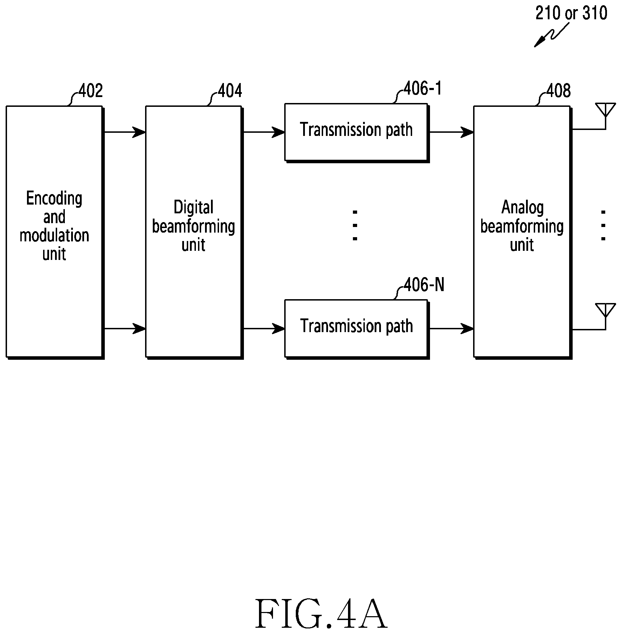

FIGs. 4A to 4C illustrate configurations of a communication unit in a wireless communication system according to various embodiments of the disclosure.

FIGs. 4A to 4C illustrate examples of the detailed configurations of the wireless communication unit 210 of FIG. 2 or the communication unit 310 of FIG. 3. Specifically, FIGs. 4A to 4C illustrate elements for performing beamforming as parts of the wireless communication unit 210 of FIG. 2 or the communication unit 310 of FIG. 3.

Referring to FIG. 4A, the wireless communication unit 210 or the communication unit 310 may include an encoding and modulation unit 402, a digital beamforming unit 404, a plurality of transmission paths 406-1 to 406-N, and an analog beamforming unit 408.

The encoding and modulation unit 402 performs channel encoding. For the channel encoding, at least one of a low-density parity check (LDPC) code, a convolution code, and a polar code may be used. The encoding and modulation unit 402 generates modulation symbols by performing constellation mapping.

The digital beamforming unit 404 performs beamforming for digital signals (for example, modulation symbols). To this end, the digital beamforming unit 404 multiplies beamforming weights by modulation symbols. The beamforming weighted values may be used for changing the magnitude and phase of the signal, and may be referred to as a "precoding matrix" or a "precoder". The digital beamforming unit 404 outputs digitally beamformed modulation symbols through the plurality of transmission paths 406-1 to 406-N. At this time, according to a multiple-input multipleoutput (MIMO) transmission scheme, the modulation symbols may be multiplexed, or the same modulation symbols may be provided to the plurality of transmission paths 406-1 to 406-N.

The plurality of transmission paths 406-1 to 406-N converts the digitally beamformed digital signals into analog signals. To this end, each of the plurality of transmission paths 406-1 to 406-N may include an inverse fast Fourier transform (IFFT) calculator, a cyclic prefix (CP) inserter, a DAC, and an up-converter. The CP inserter is for an orthogonal frequency division multiplexing (OFDM) scheme, and may be omitted when another physical layer scheme (for example, a filter bank multicarrier (FBMC)) is applied. That is, the plurality of transmission paths 406-1 to 406-N provides independent signal-processing processes for a plurality of streams generated through the digital beamforming. However, depending on an implementation scheme, some of the elements of the plurality of transmission paths 406-1 to 406-N may be used in common.

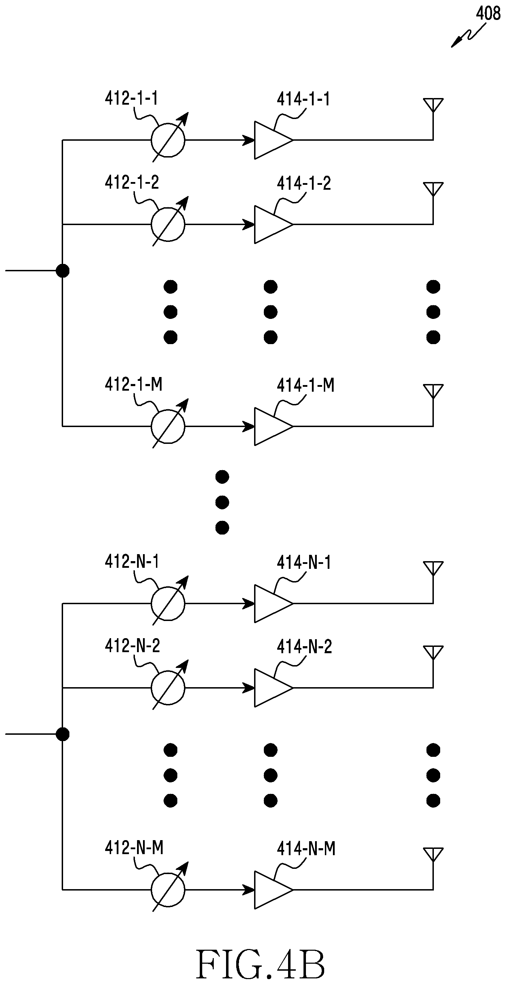

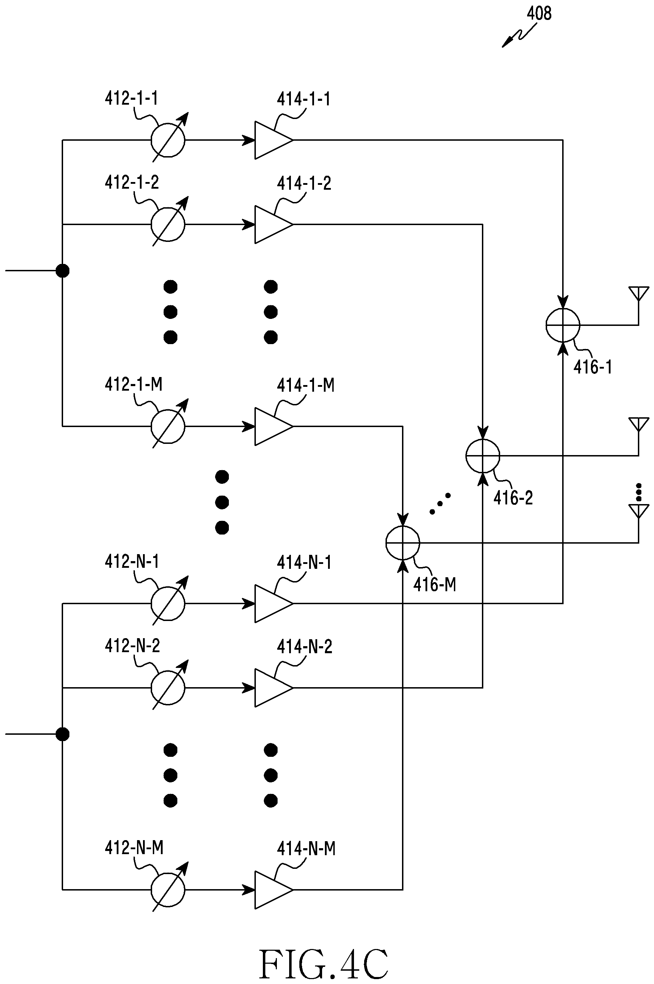

The analog beamforming unit 408 performs beamforming on an analog signal. To this end, the digital beamforming unit 404 multiplies analog signals by beamforming weighted values. The beamformed weighted values are used to change the magnitude and phase of the signal. More specifically, the analog beamforming unit 408 may be configured as illustrated in FIG. 4B or 4C according to the connection structure between the plurality of transmission paths 406-1 to 406-N and the antennas.

Referring to FIG. 4B, signals input into the analog beamforming unit 408 are transmitted through the antennas via phase/size conversion and amplification operation. At this time, the signals in respective paths are transmitted through different antenna sets, that is, antenna arrays. In the processing of signals input through a first path, the signals are converted into signal sequences having the same or different phases/sizes by phase/size converts 412-1-1 to 412-1-M, amplified by amplifiers 414-1-1 to 414-1-M, and then transmitted through antennas.

Referring to FIG. 4C, the signals input into the analog beamforming unit 408 are transmitted through the antennas via phase/size conversion and amplification operation. At this time, the signals in respective paths are transmitted through the same antenna set, that is, antenna array. In the processing of signals input through the first path, the signals are converted into signal sequences having the same or different phases/sizes by the phase/size conversion units 412-1-1 to 412-1-M and are amplified by the amplifiers 414-1-1 to 414-1-M. The signals amplified to be transmitted through one antenna array are added by adders 416-1-1 to 416-1-M, based on antenna elements, and then transmitted through antennas.

FIG. 4B illustrates an example in which an independent antenna array is used for each transmission path, and FIG. 4C illustrates an example in which transmission paths share one antenna array. However, according to another embodiment, some transmission paths may use independent antenna arrays and the remaining transmission paths may share one antenna array. Further, according to yet another embodiment, a structure that may adaptively vary depending on the situation may be used by applying a switchable structure between transmission paths and antenna arrays.

A V2X service using the sidelink may be divided into a basic safety service and an advanced service.

The basic safety service may include detailed services such as a vehicle alert (CAM or BSM) service, a left turn alert service, a front collision warning service, an emergency vehicle approach alert service, a forward obstacle warning service, and an intersection signal information service. Further, it may be designed to transmit and receive V2X information by using the broadcast transmission scheme and may be supported using the existing 4G-based V2X communication scheme. The advanced service has more stringent quality of service (QoS) requirements compared to the basic safety service, and needs a scheme of transmitting and receiving V2X information through unicast and groupcast transmission schemes in order to transmit and receive V2X information within a specific vehicle group or to transmit and receive V2X information between two vehicles.

The advanced service may include detailed services such as a platooning service, an autonomous driving service, a remote driving service, and an extended sensor-based V2X service. The sidelink communication scheme of the NR system is not limited to the above-described V2X service, and may include communication between UEs for providing a public safety and commercial service, relay between UE and BS (U2N relay) for increasing coverage of the BS, relay between UEs (U2U relay) for increasing the range of communication between UEs, and the like.

In the next-generation wireless mobile communication, for the communication service between UEs, the BS may allocate and indicate resources required for communication between UEs to the UE by using one of the following two sidelink resource allocation modes.

### 1) Mode 1

Mode in which the BS configures transmission and reception resources used for sidelink communication of the UE through a radio resource control (RRC) reconfiguration message (RRCReconfiguration) and indicates transmission resources through the RRC reconfiguration message (RRCReconfiguration) or a downlink control information (DCI) message, and the UE performs sidelink communication through the transmission resources indicated by the BS.

### 2) Mode 2

Mode in which the BS transmits a transmission and reception resource pool used for sidelink communication of the UE through configuration information (RRC reconfiguration message (RRCReconfiguration) or a sidelink service broadcast message (system information block (SIB)) or pre-configuration, and the UE selects transmission resources within the transmission resource pool configured by the BS through a sensing-based, partially sensing-based, or random selection scheme to perform the sidelink communication.

When the UE performing sidelink communication is within the coverage of the BS and is in the RRC-connected state (RRC-Connected), a transmission and reception resource pool configured as an RRC reconfiguration (RRCReconfiguration) message may be used. When the UE is within the coverage of the BS and is in the RRC-non-connected state (RRC-Idle or RRC-Inactive), a transmission and reception resource pool configured as a sidelink service broadcast message (SIB) may be used. When the UE is outside the coverage of the BS, a transmission and reception resource pool configured as a pre-configuration may be used.

The disclosure describes solutions for improving interference avoidance performance of sidelink communication mode 2 using inter-UE coordination that is a subgoal for resource allocation enhancement in enhanced sidelink (NR sidelink enhancement) items included in Release 17 of 3GPP.

In Release 17 of 3GPP, at least two inter-UE coordinate schemes below are used.
1) A UE transmitting an explicit request for inter-UE coordination is a UE-B. A UE receiving the explicit request transmitted by the UE-B and transmitting inter-UE coordination information to the UE-B is a UE-A. The UE-A transmits a set of preferred or non-preferred resources to the UE-B. The UE-B reflects the received inter-UE coordinate information in resource selection or resource reselection and preferentially selects intersection of preferred resources and selectable resources, and relative complement of non-preferred resources with respect to selectable resources.
2) A UE receiving inter-UE coordination information (conflict information) transmitted by the UE-A due to detection of conflict of the corresponding resources and reflecting the corresponding information in resource reselection after sidelink control information (SCI) for resource reservation is transmitted is the UE-B. If it is determined that resources indicated by the sidelink control information (SCI) is resources that is being used or is scheduled to be used by the UE-A or resources reserved by other UEs including the UE-B when the UE-B transmits sidelink control information (SCI) for resource reservation, a UE transmitting inter-UE coordination information to the UE-B is the UE-A. When receiving information using inter-UE coordinate scheme 2, the UE-B expects generation of interference or conflict of all reserved resources among the reserved resources indicated by the corresponding coordination information and performs a resource reselection process of randomly selecting resources again from the relative complement of the resources indicated by coordination information for selectable resources.

In the following example and embodiment, conflict of resources means the case where it is determined that the next resources indicated by the sidelink control information (SCI) are resources being used or scheduled to be used by the UE-A or resources reserved by other UEs including the UE or a situation equivalent thereto.

In the disclosure, according to various examples and embodiments, problems that may occur in IUC scheme 2 available in current sidelink resource allocation mode 2 are stated and a method of efficiently solving the problems is described.

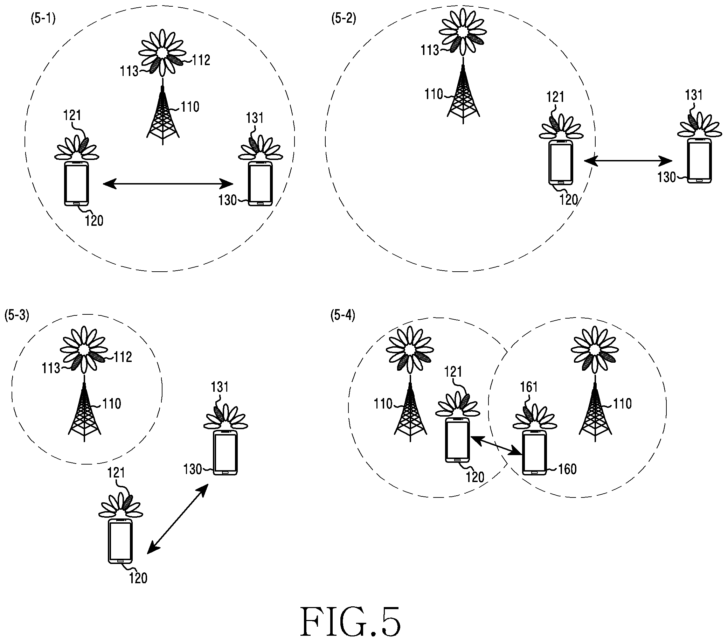

FIG. 5 is a diagram illustrating a situation where direct communication between UEs such as a unicast, groupcast, or broadcast manner is performed according to various embodiments of the disclosure.

Referring to FIG. 5, four scenarios to which embodiments of the disclosure can be applied are illustrated.

In a scenario as indicated by reference numeral (5-1), the UE 120 and the UE 130 within the coverage of the BS 110 may perform direct communication in the unicast, groupcast, or broadcast manner. According to an embodiment of the disclosure, the UE 120 and the UE 130 may exchange inter-UE coordination information.

In a scenario as indicated by reference numeral (5-2), the UE 120 within the coverage of the BS 110 and the UE 130 that is not within the coverage of the BS may perform direct communication in the unicast, groupcast, or broadcast manner. According to an embodiment of the disclosure, the UE 120 and the UE 130 may exchange inter-UE coordination information.

In a scenario as indicated by reference numeral (5-3), the UE 120 and the UE 130 that are not within the coverage of the BS 110 may perform direct communication in the unicast, groupcast, or broadcast manner. According to an embodiment of the disclosure, the UE 120 and the UE 130 may exchange inter-UE coordination information.

In a scenario as indicated by reference numeral (5-4), the UE 120 within the coverage of the BS 110 and the UE 150 within the coverage of the BS 150 may perform direct communication in the unicast, group cast, or broadcast manner. According to an embodiment of the disclosure, the UE 120 and the UE 160 may exchange inter-UE coordination information.

Although not illustrated in FIG. 5, the disclosure can be realized without any restrictions according to whether any UE is in the RRC-connected state or the RRC inactive (or RRC idle) within the coverage of the BS, or out of coverage.

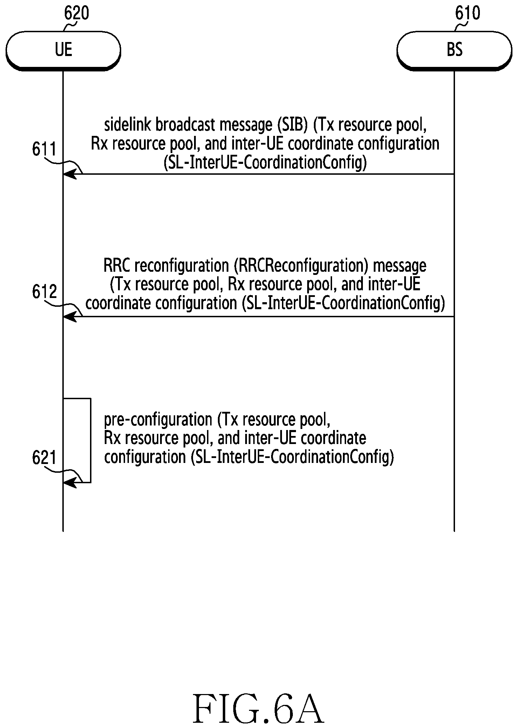

FIGs. 6A to 6E illustrate a procedure of configuring transmission resources and selecting resources of the UE using sidelink resource allocation mode 2, an operation of reserving resources for sidelink communication and transmitting data, and an operation of inter-UE coordination scheme 2 of the UE-A and the UE-B according to various embodiments of the disclosure.

In order to describe the operation of the UE in detail, the communication unit 310, the storage unit 320, and the controller 330 that are hardware components of FIG. 2 may be divided into software protocol stacks and indicated as physical (PHY), media access control (MAC), radio link control (RLC), packet data convergence protocol (PDCP), service data adaption protocol (SDAP), radio resource control (RRC), and the like, but the specification illustrates only the operation of each of PHY and MAC that performs the resource selection operation and the interaction between the corresponding protocol stacks, and description of the remaining protocol stacks and the operation between stacks is omitted.

Referring to FIG. 6A, a BS 610 may provide a configuration for using sidelink resource allocation mode 2 to a UE 620 through a system information block (SIB) in operation 611 or provide the same through an RRC reconfiguration (RRCReconfiguration) message in operation 612. If the UE 620 does not receive the message from the BS 610 or no longer receives the message, a configuration for using resource allocation mode 2 may be applied through pre-configuration information in operation 621. At this time, the configuration provided to the UE 620 or applied as the pre-configuration may include at least the following information. However, configurations required for resources of general data transmission and reception and other functions may be clearly understood by those skilled in the art without any additional description, and thus the corresponding configurations are not mentioned in the specification and only the configuration associated with the disclosure is described.
- Transmission resource pool (Tx resource pool), reception resource pool (Rx resource pool), and inter-UE coordinate configuration (SL-InterUE-CoordinationConfig).

The transmission resource pool includes a frequency range of resources that can be selected by the UE for sidelink communication and configurations for resource selection. The UE 620 may perform a procedure of selecting resources for transmitting data through the sidelink to another UE, reserving resources, and transmitting data by using the configuration.

The reception resource pool configures a frequency range of resources that can be received by the UE 620 for sidelink communication and information for reception. In order to receive data using the sidelink from another UE, the UE 620 monitors sidelink control information (SCI) according to the corresponding resource pool and configuration.

The inter-UE coordinate configuration is to configure the above-described inter-UE coordination, and may include the following configurations in inter-UE coordinate scheme 2.
- UE-B indication (sl-IndicationUE-B), whether to use IUC scheme 2 (sl-IUC-Scheme2), option for determining whether there is resource conflict by UE-A (sl-OptionForCondition2-A-1), time and frequency information (sl-PSFCH-Occasion and sl-RB-SetPSFCH) of physical sidelink feedback channel (PSFCH) resources to transmit resource conflict indication, whether to exclude resources in units of slots when resource conflict indication is received (sl-SlotLevelResourceExclusion), and whether non-destination UE is UE-A (sl-TypeUE-A).

In the UE-B indication (sl-IndicationUE-B), the UE-B indicates that the UE transmitting the corresponding SCI is the UE-B through one LSB among reserved bits of SCI format 1-A.

Whether to use IUC scheme 2 (sl-IUC-Scheme2) may allow the UE receiving the configuration to transmit or receive conflict information through IUC scheme 2.

The option for determining whether resources conflict by the UE-A (sl-OptionForCondition2-A-1) indicates whether to use preset reference signals received power (RSRP) according to a priority included in SCI of the UE-B and other UEs or whether to determine resource conflict, based on a relative RSRP value and the preset RSRP when the UE receiving the configuration determines resource conflict.

Time and frequency information (sl-PSFCH-Occasion and sl-RB-SetPSFCH) of PSFCH resources to transmit the resource conflict indication indicates time and frequency resources of PSFCH resources through which the UE-A transmits conflict information to the UE-B according to the inter-UE coordination operation.

Whether to exclude resources in units of slots (sl-SlotLevelResourceExclusion) when the resource conflict indication is received indicates whether to inform of only resources indicated by conflict information or inform of all resources of the slot including the corresponding resources when the PHY layer of the UE-B informs of resources indicated to conflict.

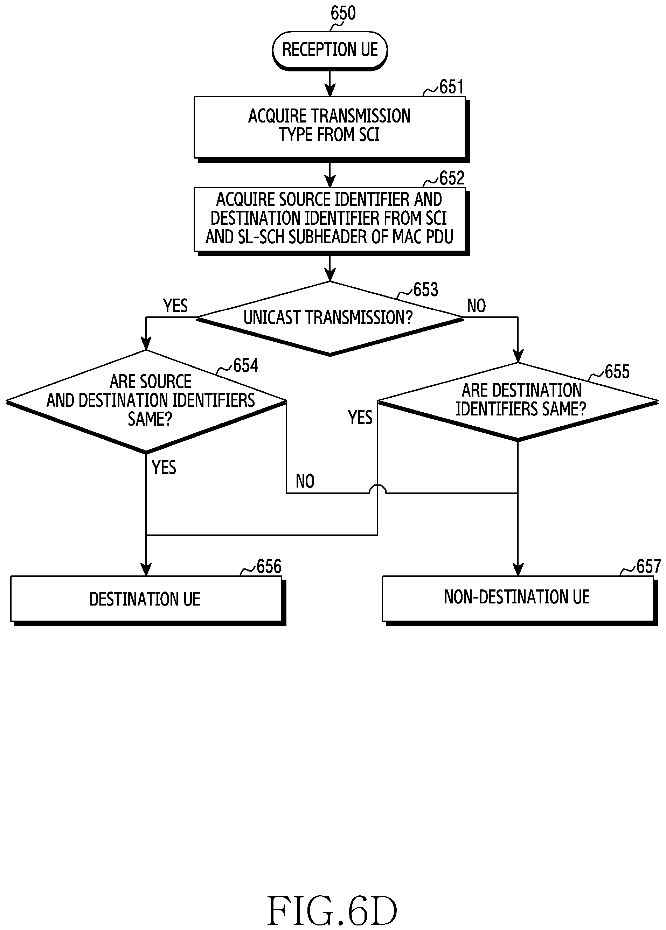

Whether the non-destination UE is the UE-A (sl-TypeUE-A) indicates whether conflict information can be transmitted even when the UE-A is not determined as the destination UE by the operation of FIG. 6D.

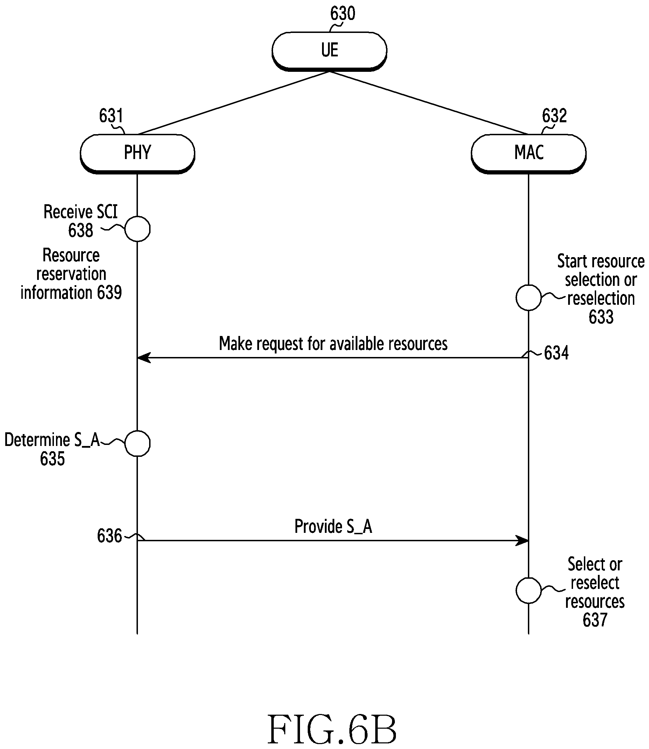

FIG. 6B illustrates a resource selection method that is referenced in the disclosure.

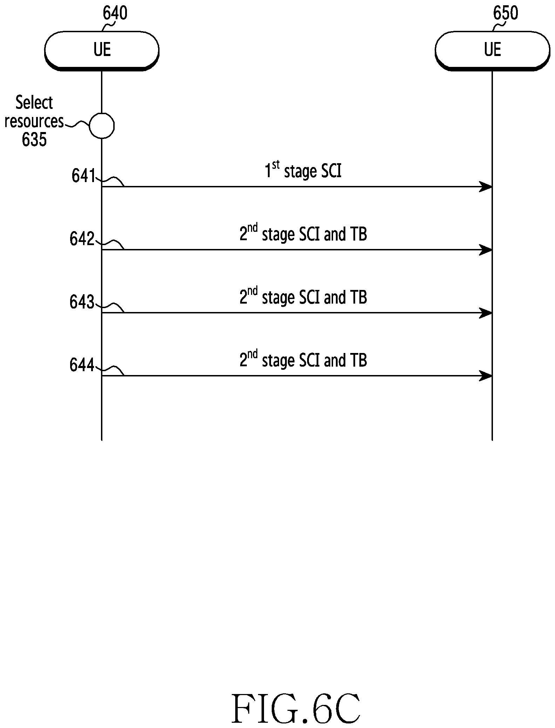

A UE 630 applies the configurations provided in FIG. 6B for transmission resource selection. A PHY layer 631 of the UE 630 receives SCI 638 transmitted by another UE and stores information 639 on resources indicated (reserved) by the corresponding SCI. At this time, the other UE may be one or more UEs and, similarly, the received SCI may be one or more pieces of SCI. When it is determined that the MAC layer 632 of the UE 630 performs transmission resource selection or reselection according to the operation of 3GPP TS 38.321 in operation 633 and the transmission resource selection or reselection starts, the MAC layer 632 of the UE 630 performs a process of making a request for available resources (S_A) in the transmission resource pools configured in operations 611, 612, and 621 to be available by the UE 630 to the PHY layer 631 in operation 634. When receiving the request in operation 634, the PHY layer 631 may determine the set (S_A) of available resources by using information including resource reservation information 639 of another UE detected in the Tx resource pool and the configuration according to the operation of 8.1.4 of 3GPP TS 38.214 in operation 635 and provide the set to the MAC layer in operation 636. The detailed method of determining S_A that is referenced in FIG. 6B follows the operation of 8.1.4 of TS 38.214, and thus, although detailed reference other than the described part is omitted, it is determined that there will be no shortage in understanding thereof by those skilled in the art to which the disclosure belongs and the detailed reference is omitted. Thereafter, in operation 637, the MAC layer 632 determines the number of resources to be used for transmission according to a higher-layer configuration and the operation of 3GPP TS 38.321 and randomly selects the time and frequency to transmit the corresponding resources from among S_A received by the PHY layer 631 I operation 636. At this time, as an additional selection condition for randomly selecting resources, a UE processing time, an interval between selected or pre-selected resources, a packet delay budget (PDB) of data to be transmitted, and the like may be considered, and refer to 3GPP TS 38.321 for a detailed selection operation. A reservation and communication method of the selected resources is described with reference to FIGs. 6C and 6D below.

FIGs. 6C and 6D illustrate a sidelink communication procedure between UEs.

FIG. 6C illustrates a procedure of, after the UE 640 selects the resources in operation 635, reserving the corresponding resources for a UE 650 through sidelink control information (SCI). The SCI may be transmitted separately through two stages. 1^{st}-stage SCI 641 may be transmitted through a physical sidelink control channel (PSCCH) while including information described below. The SCI may be used for scheduling 642, 643, and 644 (at this time, 644 is transmitted only when three resources are reserved) of a physical sidelink shared channel (PSSCH) including 2^{nd}-stage SCI and a TB. Description of information included in the 1^{st}-stage SCI other than the information described below is omitted in the disclosure.
- A priority, frequency resource assignment information, time resource assignment information, a resource reservation period, a 2^{nd}-starge SCI format
- The priority indicates the highest priority among sidelink logical channels included in a MAC PDU of a TB to be transmitted or MAC control elements (CEs).
- The frequency resource assignment information indicates the lowest sub-channel of resources reserved by the corresponding sidelink control information (SCI). Two or three PSSCH resources may be reserved according to a higher-layer configuration.
- The time resource assignment information indicates a logical slot offset of resources reserved by the corresponding SCI. Two or three PSSCH resources may be reserved according to a higher-layer configuration.
- The resource reservation period indicates that the resources indicated by the frequency and resource assignment information are reserved again after the corresponding period from the reserved resources in a semi-static manner. If the resources reserved by the corresponding SCI are not used any more, the corresponding information is not included.
- The 2^{nd}-starge SCI format indicates that SCI format 2-A, SCI format 2-B, or SCI format 2-C is used.

The 2^{nd}-stage SCI may be SCI format 2-A, SCI format 2-B, or SCI format 2-C, and SCI format 2-A may include the following information. Description of other information included in SCI format 2-A is omitted. Further, SCI format 2-C includes provision of/request for information for IUC Scheme 1 and the corresponding information instead of a transmission type indicator of SCI format 2-A, and thus description thereof is omitted in the disclosure that handles IUC Scheme 2.
- A part of a source identifier (source layer-2 ID) (lower 8 bits of 24 bits (8 LSB)), a part of a destination identifier (destination lwyer-2 ID) (lower 16 bits of 24 bits (16 LSB)), and a transmission type indicator (cast type indicator)
- The source identifier is 24 bits, and the part indicated by SCI corresponds to lower 8 bits of 24 bits.
- The destination identifier is 24 bits, and the part indicated by SCI corresponds to lower 16 bits of 24 bits.
- The transmission type indicator indicates one of unicast, groupcast (when HARQ ACK/NACK is used), groupcast (when only HARQ NACK is used), and broadcast.

SCI format 2-B includes the following information. Description of other information included in SCI format 2-B is omitted.
- A part of a source identifier (source layer-2 ID) (lower 8 bits of 24 bits (8 LSB)), a part of a destination identifier (destination lwyer-2 ID) (lower 16 bits of 24 bits (16 LSB)), a zone identifier (zone ID), and a communication range requirement
- The source identifier is 24 bits, and the part indicated by SCI corresponds to lower 8 bits of 24 bits.
- The destination identifier is 24 bits, and the part indicated by SCI corresponds to lower 16 bits of 24 bits.
- The UE receiving the zone identifier and the communication range requirement may transmit HARQ-NACK according to configurations by using location information when the distance between the center of the closest zone and the UE location is within the communication range requirement.

Thereafter, for convenience of description, the 1^{st}-stage SCI and the 2^{nd}-strage SCI are collectively called SCI.

The SL-SCH Subheader of the MAC PDU includes the following information. Description of other information included in the SL-SCH Subheader of the MAC PDU is omitted.
- A part of a source identifier (source layer-2 ID) (upper 16 bits of 24 bits (16 MSB)) and a part of a destination identifier (destination lwyer-2 ID) (upper 8 bits of 24 bits (8 MSB))
- The Source Layer-2 ID is 24 bits, and the part indicated by the SL-SCH Subheader of the MAC PDU corresponds to upper 16 bits of 24 bits.
- The Source Layer-2 ID is 24 bits, and the part indicated by the SL-SCH Subheader of the MAC PDU corresponds to upper 8 bits of 24 bits.

The operation of the UE 650 receiving the SCI and the TB is illustrated in FIG. 6D.

FIG. 6D illustrates a procedure in which the reception UE 650 receives SCI and TBs from the transmission UE 640 and then determines a destination UE.

Referring to FIG. 6D, the UE 650 receiving the SCI and TBs 642, 643, and 644 transmitted by the transmission UE 640 may acquire a transmission type (cast type), a source identifier, and a destination identifier from the SCI and an SL-SCH Subheader of a MAC PDU through operation 651 and operation 652, determine a destination or non-destination UE through the following procedure, and transmit the same to a higher layer.

Such a process may be performed through comparison between information indicated by sidelink control information (SCI) and a sidelink-shared channel (SL-SCH) Subheader of a medium access control (MAC) protocol data unit (PDU) of TBs 642, 643, and 644 transmitted by the transmission UE 640 and information occupied by the UE 650 receiving the same.

When it is determined that the transmission type is unicast in operation 653, the reception UE 650 may proceed to operation 654 and determine whether the source identifier and the destination identifier acquired in operation 652 are the same as a destination identifier and a source identifier of a unicast link occupied by the reception UE 650. When they are the same as each other, the reception UE may proceed to operation 656 and determine a destination UE. On the other hand, when they are not the same as each other, the reception UE may proceed to operation 657 and determine a non-destination UE. Detailed description of the connection and management of the unicast link is omitted in the disclosure.

When it is determined that the transmission type is groupcast or broadcast in operation 653, the reception UE may proceed to operation 655 and determine whether the destination identifier acquired in operation 652 is the same as a destination identifier of groupcast or broadcast occupied by the reception UE 650. When they are the same as each other, the reception UE may proceed to operation 656 and determine a destination UE. On the other hand, when they are not the same as each other, the reception UE may proceed to operation 657 and determine a non-destination UE. Detailed description of management of the destination identifier of broadcast and groupcast is omitted. It may be determined whether to transmit conflict information according to determination of the destination UE and the non-destination UE, the configuration described in FIG. 6A, and the operation of 3GPP TS 38.214.

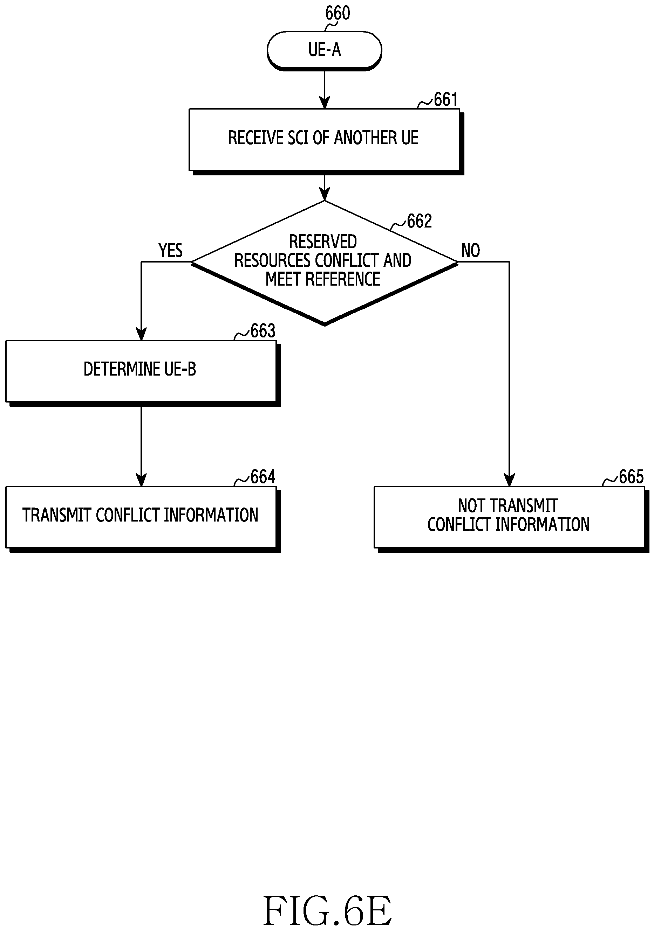

FIG. 6E illustrates the operation of the UE-A using IUC Scheme 2 that is referenced in the disclosure.

When a UE-A 660 is configured to perform the IUC Scheme 2 operation by the configuration of FIG. 6A in operation 611, 612, or 621 and receives SCI of another UE in operation 661, the UE-A 660 determines whether resources conflict according to the configuration of determining whether the resources configured in FIG. 6A conflict (sl-OptionForCondition2-A-1), whether the corresponding resources are reserved, and the like according to the stated configuration and the reference of 3GPP TS 38.212 and TS 38.214 in operation 662. When conflict of the reserved resources is generated, the UE-A 660 determines a UE-B which is a target to which conflict information is to be transmitted among UEs which reserve the resources having resource conflict in operation 663. The UE-B may be a UE transmitting SCI 661 according to the operation of 3GPP TS 38.212 or another UE conventionally transmitting SCI. Thereafter, the UE-A 660 transmits conflict information to the UE-B by using time and frequency resources according to an inter-UE coordination configuration in operation 664. When conflict of the reserved resources is not generated or does not comply with the reference, the conflict information is not transmitted in operation 665.

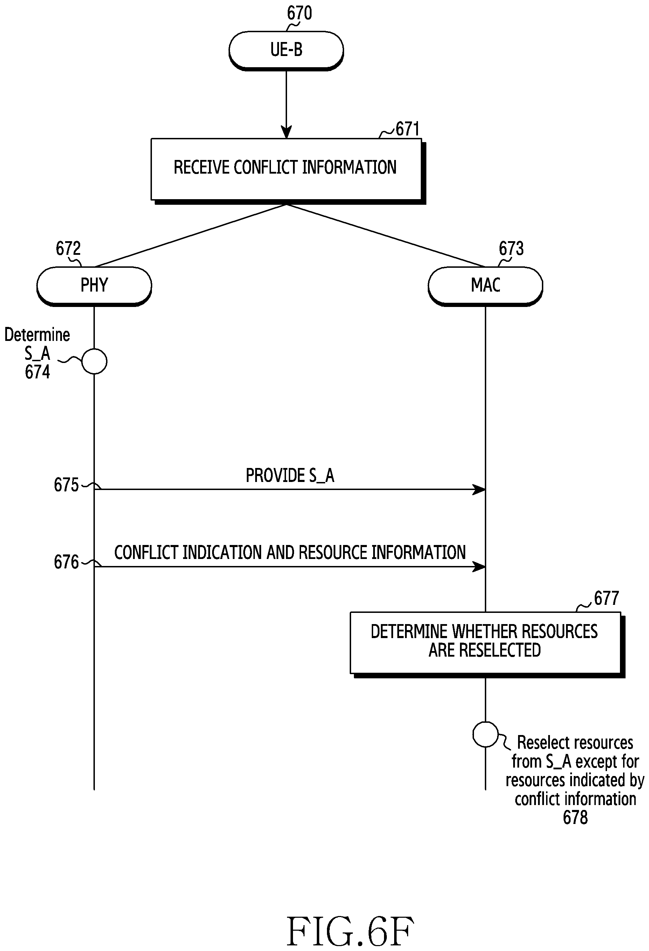

FIG. 6F illustrates the operation of the UE-B using IUC Scheme 2 that is referenced in the disclosure.

When a UE-B 670 is configured to perform IUC Scheme 2 operation through the configuration 611, 612, or 621 of FIG. 6A and the UE-A transmits conflict information to the UE-B 670 according to the operation of FIG. 6E and the UE-B receives the conflict information in operation 671, a PHY layer 672 of the UE-B 670 transmits a set of available resources (S_A) determined in operation 674 to be the same as operation 635 of FIG. 6B to a MAC layer 673. Further, the PHY layer 672 of the UE-B 670 transmits information on resources through which the conflict information is received and a conflict indication 676 to the MAC layer 673. The UE-B receiving the same compare the set 676 of resources indicated by the conflict information and resources previously reserved by the SCI in operation 677 and perform resource reselection for the same reserved resources in operation 678. At this time, the resource reselection in operation 678 is similar to the process 637 described in FIG. 6B, but a part of randomly selecting resources from a set except for the set 676 of resources indicated by the conflict indication in S_A received in operation 675 is added for IUC Scheme 2. Thereafter, reselected resources transmit SCI for reserving sidelink resources with reference to FIG. 6C.

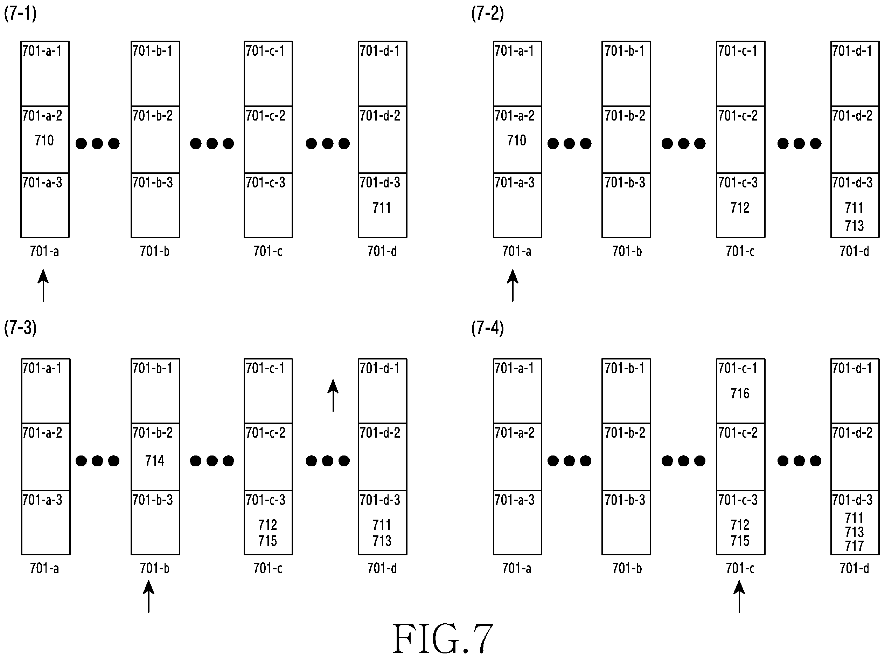

FIG. 7 is a diagram illustrating problems occurring when the conflict indication is not stored.

A total of 12 factors 701-a-1 to 701-d-3 illustrated in parts (7-1) to (7-4) are some of the resources that can be selected from the transmission resource pool. In practice, the larger number of resources than illustrated may be included in S_A and reserved, but brief expression is illustrated for convenience of description, and thus the problems occurring when the conflict indication is not stored are not limited to an embodiment described in FIG. 7. A vertical axis of the illustrated resources denotes a subchannel corresponding to a minimum unit of PSSCH allocation in a frequency range, and a horizontal axis denotes a slot corresponding to a minimum unit of PSSCH allocation in a time range. The physical size of the subchannel and the slot may vary depending on subcarrier spacing (SCS), a bandwidth part (BWP) configuration, and the like in the case of NR, and accordingly, an absolute value is not used in the disclosure. Further, in the future, the definition or the minimum allocation unit of the subchannel and the slot may become different according to a change in the 3GPP standard, but the disclosure can be easily changed and applied without limiting to the above-described content.

Part (7-1) indicates resources configured in the transmission resource pool of any UE (referred to as a 1^{st} UE) and resources 710 and 711 selected through a resource selection procedure and reserved for the UE-A through SCI in a viewpoint of the 1^{st} UE. The 1^{st} UE configured to use IUC Scheme 2 performs a resource selection procedure for sidelink communication. As a result, two resources 701-a-2 and 701-d-3 of transmissions 710 and 711 are selected and resources for sidelink communication are reserved for the UE-A through SCI.

Part (7-2) indicates resources reserved from a viewpoint of the UE-A configured to use IUC Scheme 2 at the time point 701-a at which SCI transmitted by the 1^{st} UE is received in part (7-1). The 1^{st} UE reserves the resources 710 and 711, but the UE-A has already reserved two resources 701-c-3 and 701-d-3 of 712 and 713 from another UE (referred to as a 2^{nd} UE) which is not the 1^{st} UE. Referring to the procedure of FIG. 6E, the UE-A may select one of the 1^{st} UE reserving the resources 710 and 711 or the 2^{nd} UE reserving the resources 712 and 713 as the UE-B, but it is assumed that the 1^{st} UE reserving the resources 710 and 711 is selected as the UE-B for convenience of description and description of the problems in the embodiment. Thereafter, the 1^{st} UE is referred to as the UE-B. Referring to FIG. 6F, the UE-A transmits conflict information for the resources 711 to the UE-B, and referring to FIG. 6E, the UE-B performs resource reselection in S_A except for the resources 711 receiving the conflict indication and the conflict information.

Part (7-3) indicates resources reserved in a viewpoint of the UE-A at the time point 701-b at which SCI for reserving newly selected by resource reselection performed by the conflict information is received from the UE-A in part (7-2). At this time, the resources 710 corresponding to 701-a that are not used any more according to the lapse of time are not shown. It is assumed that reselected resources 714 and 715 after the UE-B performing resource reselection receives the conflict information are 701-b-2 and 701-c-3, respectively. Since the UE-B receives only the conflict indication for the resources 711 (701-d-3), referring to FIG. 6F, the UE-B may randomly reselect resources from S_A except for the resources 711 and the resources 712 (701-c-3) reserved by the 2^{nd} UE may be selected during the resource reselection process of the UE-B. Referring to part (7-2) of FIG. 6E, the resources 712 are reserved by the 2^{nd} and the UE-A may transmit conflict information for the resources 715 to the UE-B. Referring to FIG. 6F, the UE-B randomly reselects resources from S_A except for the resources 715 receiving the conflict indication and the conflict information. In part (7-3), the case where the resources 712 are selected from among the resources selected by the UE-B through the reselection is not a functional problem of IUC Scheme 2 since the UE-B is not aware of whether there is conflict.

Part (7-4) indicates resources reserved in a viewpoint of the UE-A at the time point 701-c at which SCI for reserving resources selected by resource reselection performed by the conflict indication is received by the UE-B in part (7-3). At this time, the resources 710 and 714 corresponding to 701-a and 701-b that are not used any more according to the lapse of time are not shown. It is assumed that reselected resources 716 and 717 after the UE-B performing resource reselection receives the conflict information are 701-c-1 and 701-d-3, respectively. Referring to FIG. 6F, the UE-B reselects resources from S_A except for the resources 715 receiving the conflict indication in the most recent reselection. At this time, the resources 711 receiving the conflict information are not excluded in part (7-2), and accordingly, may be reselected by the UE-B. Such an operation is illustrated as a problem to be solved by the disclosure as a functional problem of IUC Scheme 2 since, although the UE-A indicates conflict to the UE-B before reselection, the resources may be selected during a future reselection process.

As an embodiment, the resources selected by the UE-B may be resources reserved by another UE (3^{rd} UE) that is not the 2^{nd} and even in this case, the UE-A may transmit conflict information to the UE-B and the corresponding problem may occur. The 2^{nd} UE and the 3^{rd} UE do not refer to specific UEs, which means that the problems illustrated in FIG. 7 may be expanded and applied to a situation where the larger number of UEs exists.

As an embodiment, the same problem may occur even if the resources transmitted along with the conflict indication to the MAC layer by the PHY layer of the UE-B inform of all resources of the slot including the corresponding resources through sl-SlotLevelResourceExclusion configured in FIG. 6A or the equivalent configuration, rather than informing of only resources indicated by conflict information.

Further, the problem illustrated in FIG. 7 may occur not only during resource reselection due to the conflict indication illustrated in FIG. 6F but also during resource selection or reselection illustrated in FIG. 6B. As an embodiment, when the UE-B selects new resources in the situation of (7-3), referring to FIG. 6B, resources 711 indicated by conflict information in part (7-2) are not excluded from S_A and thus may be selected or reselected by the UE-B, which means that the UE-B may select the corresponding resources 711 although the UE-A indicates them through the conflict information.

All embodiments having such a problem cannot be included in the specification, but the above-described problem indicates that it can be clearly understood by those skilled in the art to which the disclosure belongs that the functional problem of IUC Scheme 2 may be applied at least to all resource selection and reselection processes including the resource reselection (that is, 5.22.1.2b of 3GPP TS 38.321 for reference) due to the conflict indication illustrated in FIG. 6F, the resource selection and reselection of 5.22.1.1 of 3GPP TS 38.321 illustrated in FIG. 6B, and resource reselection due to re-evaluation and pre-emption of 5.22.1.2.a of 3GPP TS 38.321 that is not illustrated in the specification.

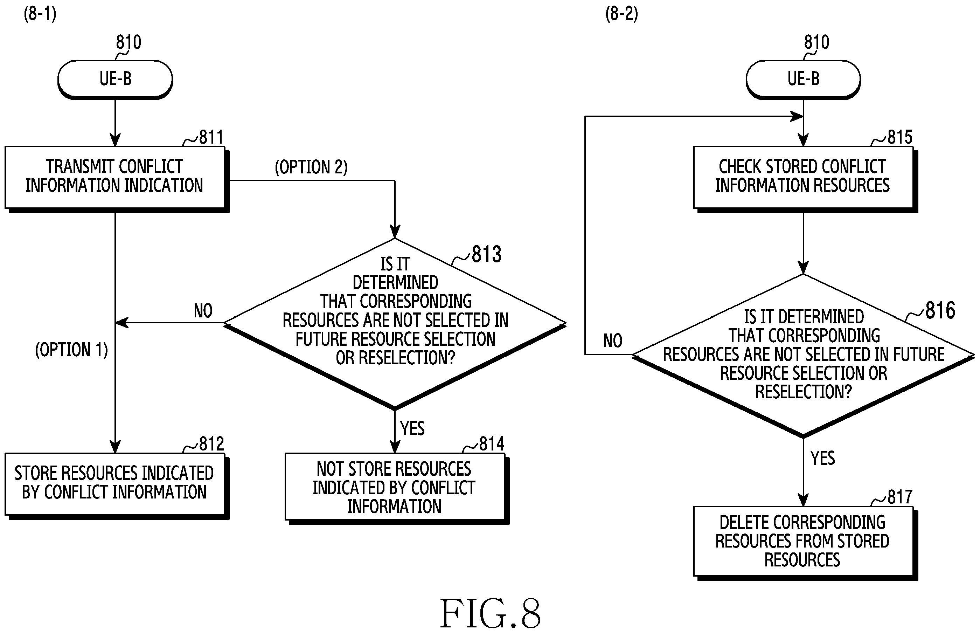

FIG. 8 illustrates a method of storing and managing a conflict indication according to various embodiments of the disclosure.

Referring to FIG. 6F, when a UE-B 810 receives conflict information from the UE-A, the PHY layer transfers information on resources corresponding to S_A and conflict information and a conflict indication to the MAC layer in operation 811. Part (8-1) illustrates a process of, when the corresponding information is received, storing the information, and referring to option 1, the UE-B 810 may store information on resources corresponding to the conflict information in operation 812 for a future resource selection or reselection process.

The stored information may include at least one piece of the following information, and may be stored as a set indicating each of the indicated resources, stored with reference to each other so that one or more indicated resources are simultaneously indicated, or stored using a method of separating the resources through a similar method.
- Time information of resources indicated by conflict information, frequency information of resources indicated by conflict information, and slot exclusion information of resources indicated by conflict information.

The time information of resources indicated by conflict information may include a location of a slot, a location of a reference slot and a TRIV value of 3GPP TS 38.214 transmitted in SCI, or an absolute time and range.

The frequency information of resources indicated by conflict information may include an index of a subchannel, an FRIV value of 3GPP TS 38.214 transmitted in SCI, and a location and size of an absolute frequency.

The slot exclusion information of resources indicated by conflict information may include 1 or 0 (true or false), a location of a slot, a TRIV value of 3GPP TS 38.214 transmitted in SCI, or an absolute time and range.

In order to minimize stored information, the UE-B 810 may reduce the number of resources stored using option 2 of part (8-1). Referring to option 2 of part (8-1), when it is determined that resources corresponding to the conflict information are not used for future resource selection or reselection in operation 813, the UE-B 810 may not store the corresponding resources in operation 814. For the determination in operation 813, information on the resources corresponding to the conflict information may be used, and at least one of the following conditions may be used.
- The case where the resources are not included in a resource selection window
- The case where the resources are located before the current slot
- The case where the resources have been already excluded from S_A

The location of the slot, and the range and size of the resource selection window may be designated by various methods, and may be indicated in the absolute time or unit or the relative time or unit for a specific absolute time or unit. Designation of the resource selection window may follow the operation of 3GPP TS 38.214 or may be changed by another configuration for the equivalent operation or a configuration of the UE.

Part (8-2) illustrates conditions and operations for deletion of some or all of the conflict information resources in operation 817. For the determination, information on resources corresponding to the stored conflicted information may be compared and deletion thereof may be determined in operation 816, and may use at least one of the following conditions.
- The case where the resources are not included in a resource selection window
- The case where the resources are located before the current slot
- The case where the resources have been already excluded from S_A

A check of the stored conflict information resources in operation 815 may be performed in every slot or according to a specific period, may follow implementation of the UE-B, or may be performed when resources are selected or reselected, but the corresponding period and a check start condition are not limited in the disclosure.

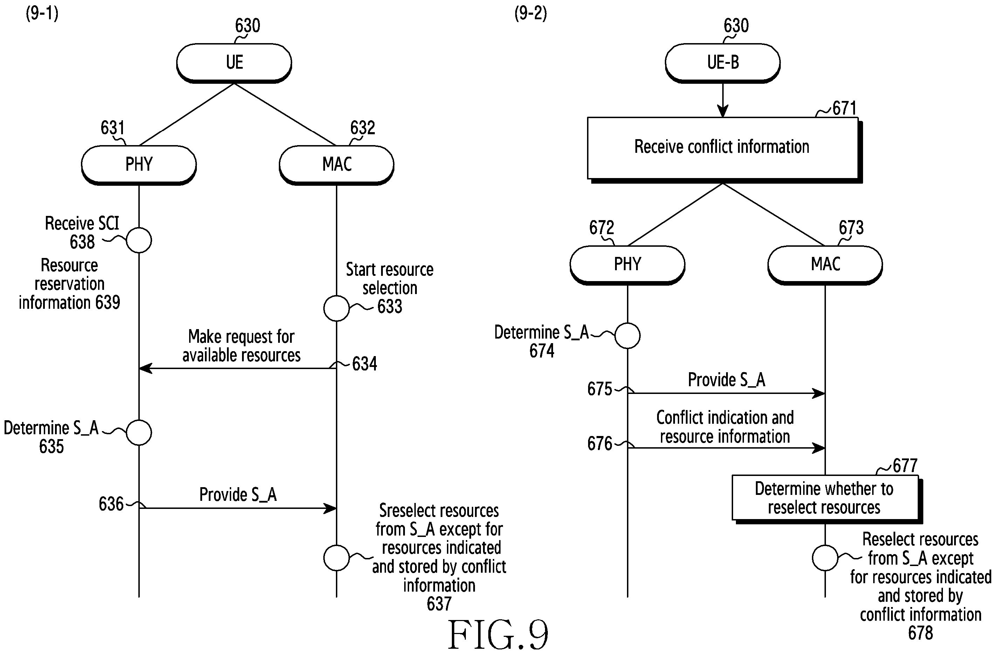

FIG. 9 illustrates an operation of using resources corresponding to stored conflict information according to various embodiments of the disclosure.

Part (9-1) illustrates the operation of FIG. 6B according to an embodiment of the disclosure. Overlapping description is omitted. In operation 637, for S_A, the MAC layer 632 may select or reselect resources by using the relative complement of resources corresponding to stored and managed conflict information described in FIG. 8.

Part (9-2) illustrates the operation of FIG. 6F according to an embodiment of the disclosure. Overlapping description is omitted. In operation 678, for S_A, the MAC layer 637 may reselect resources by using the relative complement of resources corresponding to stored and managed conflict information in FIG. 8.

Although not illustrated in drawings, when resources are reselected due to re-evaluation or pre-emption of 5.22.1.2a of 3GPP TS 38.321, as another embodiment, resources may be reselected using the relative complement of resources corresponding to stored and managed conflict information in FIG. 8 for S_A.

An apparatus and a method according to various embodiments of the disclosure may solve the problem of selecting or reselecting resources of which conflict was previously indicated even when IUC Scheme 2 is used in sidelink communication, thereby increasing effects of the corresponding function.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method of a first terminal for sidelink communication, the method comprising:
transmitting, to a second terminal, sidelink control information (SCI) comprising resource reservation information on resources for sidelink transmission;
receiving, from the second terminal, conflict information on resources indicated by the resource reservation information; and
reselecting resources for future sidelink transmission, based on at least one or more of previously received conflict information.

2. The method of claim 1, further comprising:
receiving, from a base station, a resource pool for the sidelink transmission; and
selecting resources for the sidelink transmission from the resource pool,
wherein the resource reservation information comprises information indicating the selected resources.

3. The method of claim 1, further comprising storing the received conflict information,
wherein, in one or more cases where resources indicated by the conflict information are not included in a resource selection window, the resources are located before a current slot, and the resources are excluded from available resources, the received conflict information is not stored.

4. The method of claim 1, wherein the conflict information is transmitted through a physical sidelink feedback channel (PSFCH).

5. A method of a second terminal for sidelink communication, the method comprising:
receiving, from a first terminal, sidelink control information (SCI) comprising resource reservation information for sidelink transmission;
determining whether conflict for resources indicated by the resource reservation information is generated; and
in case that it is determined that the conflict for the resources indicated by the resource reservation information is generated, transmitting, to the first terminal, conflict information of the resources indicated by the resource reservation information.

6. The method of claim 5, further comprising receiving, from a base station (BS) a resource pool for the sidelink transmission,
wherein the resource reservation information comprises information indicating resources selected from the resource pool by the first terminal for the sidelink transmission.

7. The method of claim 5, wherein the conflict information is transmitted through a physical sidelink feedback channel (PSFCH).

8. The method of claim 5, further comprising performing the sidelink communication with the first terminal by using resources reselected based on the conflict information.

9. A first terminal for sidelink communication, the first terminal comprising:
a transceiver; and
a controller coupled with the transceiver and configured to:
transmit, to a second terminal, sidelink control information (SCI) comprising resource reservation information of resources for sidelink transmission;
receive, from the second terminal, conflict information of resources indicated by the resource reservation information; and
reselect resources for future sidelink transmission, based on at least one or more of previously received conflict information.

10. The first terminal of claim 9, wherein the controller is configured to:
receive, from a base station (BS), a resource pool for the sidelink transmission; and
select resources for the sidelink transmission from the resource pool, and
wherein the resource reservation information comprises information indicating the selected resources.

11. The first terminal of claim 9, wherein the controller is configured to:
store the received conflict information; and
in one or more cases where resources indicated by the conflict information are not included in a resource selection window, the resources are located before a current slot, and the resources are excluded from available resources, not store the received conflict information.

12. The first terminal of claim 9, wherein the conflict information is transmitted through a physical sidelink feedback channel (PSFCH).

13. A second terminal for sidelink communication, the second terminal comprising:
a transceiver; and
a controller coupled with the transceiver and configured to:
receive, from a first terminal, sidelink control information (SCI) comprising resource reservation information for sidelink transmission;
determine whether conflict for resources indicated by the resource reservation information is generated; and
in case that it is determined that the conflict for the resources indicated by the resource reservation information is generated, transmit conflict information for the resources indicated by the resource reservation information to the first terminal.

14. The second terminal of claim 13, wherein the controller is configured to receive, from a base station (BS), a resource pool for the sidelink transmission, and
wherein the resource reservation information comprises information indicating resources selected for the sidelink transmission from the resource pool.

15. The second terminal of claim 13, wherein the conflict information is transmitted through a physical sidelink feedback channel (PSFCH).
